# EUROPEAN PATENT SPECIFICATION

(11) **EP 4 063 544 B1**
(45) Date of publication and mention of the grant of the patent: **09.07.2025**
(21) Application number: 20889390.9
(22) Date of filing: 18.11.2020
(51) Int. Cl.: D02G 3/38, D02G 3/44, G06K 19/077

(54) **COMPOSITE YARN AND METHOD FOR MANUFACTURING SAME**
VERBUNDGARN UND VERFAHREN ZUR HERSTELLUNG DAVON
FIL COMPOSITE ET SON PROCÉDÉ DE FABRICATION

(30) Priority: 19.11.2019 JP 2019208379
(43) Date of publication of application: 28.09.2022
(73) Proprietor: SHIMA SEIKI MFG., LTD., Wakayama 641-0003 (JP)
(72) Inventor: HARII Tomoaki, Sabae-shi, Fukui 916-8550 (JP); TONOMORI Fumio, Sabae-shi, Fukui 916-8550 (JP); IWASAKI Yoshihiro, Sabae-shi, Fukui 916-8550 (JP); TAJIMA Eiji, Sabae-shi, Fukui 916-8550 (JP); KIMURA Seiki, Wakayama-shi, Wakayama 641-8511 (JP); ANAZAWA Chiharu, Osaka-shi, Osaka 530-8605 (JP)
(74) Representative: Schmidbauer, Andreas Konrad
(86) International application number: PCT/JP2020/043012
(87) International publication number: WO 2021/100764

(56) References cited:
- WO-A1-2017/091154
- JP-A- 2005 226 165
- JP-A- 2013 188 278
- JP-A- 2013 189 718
- US-A1- 2003 211 797

## Description

### Field of the Invention

The present invention relates to a composite yarn supporting an electronic component and a method for producing the same.

### Back-Ground Art

Composite yarns for supporting electronic components for providing yarns and fabrics for textiles with electronic properties have been conventionally proposed. These composite yarns have been used for making textiles with electronic components practical.

As a composite yarn supporting electronic components, Patent Document 1 discloses one comprising: a yarn core made of a fiber material; a supporting member fixed with an electronic component and wound upon the yarn core; and a retention fiber wound around the yarn core. Further, Patent Document 2 discloses a wire comprising: a chip element having a core and a wire portion around the core; and a covering fiber wound around the chip element. Patent Document 3 discloses an RFID module having an RFIC element and an electrically conductive antenna connected to the RFIC element and a sheath of tubular knitted fabric covering the RFID module.

Further, Patent Document 4 discloses a multi-filament electrically conductive yarn comprising an insulating fiber material covered by a metallic material for a material of these composite yarns. Such an electrically conductive yarn is flexible, electrically conductive, with low high-frequency transmission loss and high bending durability. Patent Document 5 discloses an RFID tag comprising an RFID module equipped with an antenna, provided with a part of a booster antenna covering the outer surface of the RFID module, and fixed with a resin adhesive.

Patent document 6 relates to a woven article having plural weave layers comprising a plurality of electrically insulating and/or electrically conductive yarn in the warp and a plurality of electrically insulating and/or electrically conductive yarn in the weft interwoven with the yarn in the warp. An electrical function is provided by one or more circuit carriers disposed in cavities in the plural layer woven article and/or one or more functional yarn in the warp and/or the weft, wherein the circuit carrier and/or functional yarn include an electrical contact for connecting to the electrically conductive yarn in the warp and/or weft.

Patent document 7 relates to a process of manufacturing a substrate containing an intermittently-insulated conductive yarn, where the process involves providing an intermittently-insulated conductive yarn having insulated and uninsulated sections, feeding the intermittently- insulated conductive yarn to a yarn attachment device and attaching the yarn to a substrate material.

### Prior Document List

### Patent Document

Patent Document 1: JP5994077
Patent Document 2: JP5815692
Patent Document 3: WO2019/151475
Patent Document 4: JP2017-75424
Patent Document 5: JP2019-82797
Patent Document 6: US 2003/211797 A1
Patent Document 7: WO 2017/091154 A1.

### Summary of the Invention

### Problem to be Solved by the Invention

When electronic components are supported on the yarn cores according to Patent Documents 1 and 2, additional and complex job steps, such as fixing the electronic component on the yarn core by winding the component upon the core or arranging the element between the core and the covering fiber. Therefore, it is difficult to fix electronic components on the yarn core without a gap and this is a problem for commercial production. While Patent Document 3 discloses to accommodate an electronic component within the tubular knitted fabric, the electronic component moves and shifts within the tubular knitted fabric and is susceptible to damage.

The RFID tag according to Patent Document 5 requires to wind the antenna line around the RFID module having a small size and has a problem for commercial production.

Therefore, the present invention aims to provide a composite yarn having an electrically conductive yarn supporting an electronic component, and provided with flexibility; durability to stretch; and durability to bending both during the weaving process or knitting process and after the process, and a manufacturing method for efficiently manufacturing the above composite yarn.

### Means for Solving the Problem

The composite yarn according to the invention is defined in claim 1. The composite yarn according to the invention can be woven or knitted in object articles as usual yarns. Further, the electronic component is protected and insulated from the outside by the protective insulating yarn.

Preferably, said electrically conductive yarn has a higher tensile strength than that of said connective insulating yarn. Accordingly, when the composite yarn is elongated, it breaks at the connective insulating yarn. It is specifically preferable that the electrically conductive yarn has a larger tensile strength than the connective insulating yarn and a smaller elongation at rupture (the ratio of the elongation before rupture and the initial length) . This configuration prevents the electrically conductive yarn from being damaged to loads.

Preferably, said electronic component adheres by an adhesive on loop-like portions formed by a portion of said electrically conductive yarns. While the adhesive may be present between the electronic component and the electrically conductive yarn, the electrically conductive yarn works as an outer antenna and is coupled to the electronic component at the loop-like portion for ensuring the signal transmission and power supply.

Preferably, said electrically conductive yarn is coated by an insulating resin layer on the outer surface of the electrically conductive yarns. This configuration enhances the durability of the composite yarn, such as washing durability.

Preferably, said electrically conductive yarn comprises a multi-filament comprising dielectric fiber material mono-filaments having a fineness smaller or equal to 10 decitex coated by a metallic material. The electrically conductive yarn has preferably a high-frequency transmission loss not larger than 5dB at 300 MHz to 1500 MHz and a bending durability such that the increase ratio in direct current resistance is not larger than 150% to 70,000 cycles or more, for example, 70,000 cycles dynamic driving test. The composite yarn has a small high-frequency transmission loss and is suitable for RF waves transmission. The composite yarn has high bending durability and can maintain the transmission characteristics at RF waves after repeated washing of clothes and so on. By the way, the main cause that the RF waves transmission loss increases is the increase in the electric resistance.

Preferably, said connective insulating yarns are wound on the ends of said electrically conductive yarns and are connected to said electrically conductive yarns. This configuration makes the electrically conductive yarns and the connective insulating yarns can be connected by a splicer, and, therefore, the yarn core can be manufactured efficiently.

Preferably, said protective insulating yarn are wound doubly on said electrically conductive yarns and said connective insulating yarns. This configuration can protect the electrically conductive yarns and the electronic components without a gap.

Preferably, said electronic component is an IC chip for RFID that has aninner antenna comprising an electrically conductive pattern. The electrically conductive yarn constitutes outer antenna, and the inner antenna and the outer antenna are electromagnetically coupled at the loop-like portion. Then, the adhesive connecting the electronic component and the electrically conductive yarn does not hinder the signal transmission and power supply between the electrically conductive yarn and the electronic component.

Here, the fineness means the thickness of a yarn, and 1 tex indicates a yarn having a weight of 1g for a length of 1000 m. 1 decitex indicates a yarn having a weight of 1g for a length of 10,000 m. The fineness not larger than 10 decitex indicates a yarn having a weight of 1g or under for a length of 1000 m. The covering process indicates winding the protective insulating yarn on the electrically conductive yarn and the connective insulating yarn. The double covering process indicates to wind the protective insulating yarn doubly.

The manufacturing method according to the invention is defined in claim 9.

The connection step can be easily performed by a splicer or the like, and the winding of the protective insulating yarn can be also easily performed. Therefore, the composite yarn can be produced easily.

Preferably, a supporting step is carried out, before said connection step, for forming a loop-like portion using a portion of said electrically conductive yarn and for adhering said electronic component on said loop-like portion such that the electronic component is integrally supported by the electrically conductive yarn.

Preferably, a covering step is carried out, before or after the supporting step, for coating the outer surface of said electrically conductive yarn by an insulating resin layer.

According to the invention, the composite yarn has superior flexibility, superior stretch durability, and superior bending durability, for weaving, knitting, and use after weaving or knitting. Further, the manufacturing method of the composite yarn is gotten.

### Brief Description of the Drawings

Fig. 1 is a schematic summary view indicating the composition of the composite yarn according to the embodiments.
Fig. 2 is an explanatory view indicating an example of the manufacturing method according to the embodiments.
Fig. 3 is a summary view of a bending test.

### Features for Carrying out the Invention

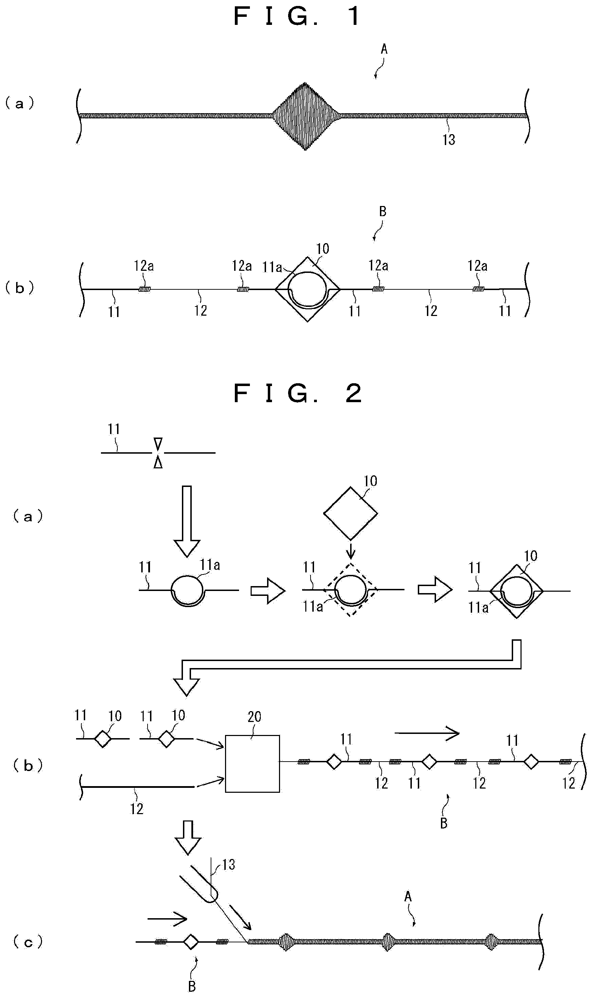

Hereinafter, features for carrying out the invention will be described in detail. Fig. 1 is a schematic summary view indicating the composition of the composite yarn according to the embodiments. Fig. 1 (a) is a schematic summary view indicating the appearance of the composite yarn, and Fig. 1 (b) is a summary view indicating a state before being covered by a protective insulating yarn.

A composite yarn A comprises or consists of: a yarn core having an electrically conductive yarn 11 that supports an electronic component 10 and are arranged in the yarn length direction, and a connective insulating yarn (connective yarn) connecting the ends of two adjacent electrically conductive yarns 11; and a protective insulating yarn (protective yarn) 13 wound upon and covering the yarn core B. The electrically conductive yarn 11 which supports the electronic component 10 is set and cut at a predetermined length in the yarn length direction of the yarn core B, and a plurality of the electrically conductive yarns 11 are arranged in the yarn length direction. Two adjacent electrically conductive yarns 11 are connected by the connective insulating yarn 12 at their ends, and the resulting yarn core B consists of one yarn-like body. The electrically conductive yarns 11 and the connective insulating yarns 12 are mutually connected.

In this example, the protective insulating yarn 13 is wound upon and covers, by the covering process, the yarn core B almost without gap; and, in other words, the protective insulating yarn 13 is wound upon and covers the surfaces of both the electronic component 10 and the electrically conductive yarn 11 to protect them. It is preferable to wind the protective insulating yarn 13 doubly by the double covering process for winding and covering with a reduced gap.

The electronic component 10 is supported by the electrically conductive yarn 11 and fixed to it by an adhesive or the like. In this example, the electronic component 10 is an IC chip as an RFID and has an inner antenna comprising an electrically conductive pattern within the chip for sending and receiving signals. The electrically conductive yarn 11 functions as an outer antenna that transmits the signals and is electromagnetically coupled with the inner antenna. A loop-like portion 11a is formed by circularly arranging part of the electrically conductive yarn 11 and is adhesively connected to the electronic component 10, for improving the signal transmission efficiency, and also for increasing the contact area between the electronic component 10 and the electrically conductive yarn 11. When the loop-like portion 11a is arranged and fixed such that the loop-like portion 11a abuts to the inner antenna within the electronic component 10, the electro-magnetic coupling is increased, and high-efficiency transmission of signals is performed. In other words, the inner antenna within the electronic component 10 and the electrically conductive yarn 11 as the outer antenna are electromagnetically coupled by the loop-like portion 11a of the electrically conductive yarn 11. And, the inner antenna and the electrically conductive yarn 11 perform the receiving of electric power and transmission of signals. In addition, an insulating layer between the electrically conductive yarn 11 and the electronic component 10, if present, doe not hinder the electro-magnetic coupling.

When the electronic component is adhesively fixed on the loop-like portion of the electrically conductive yarn, not but they are electrically directly connected, troubles such as damage of the electrical connection between them, by outer forces such as bending or the like, are avoided. In addition, with the direct electrical connection, the connection portion (in particular, the base portion of the connection wire) is easily flooded and difficult to waterproof. However, the above composition without direct electrical connection is easily made completely waterproof, if the electronic component and the electrically conductive yarn are respectively made waterproof.

The support portion of the electrically conductive yarn 11 for supporting the electronic component 10 is not limited to the loop-like portion but may be various shapes according to the species and shapes of the electronic component 10. For example, it may be U-like. When waterproofing is not needed, the electrically conductive yarn can be electrically directly connected to the electronic component.

The whole portions of the electronic component 10 and the loop-like portion 11a of the electrically conductive yarn 11 may be resin sealed for enhancing strength and durability. In this case, the whole outer surface of the electrically conductive yarn 11 and the electronic component 10 may be resin sealed. Further, the outer surface of the electrically conductive yarn 11 may be covered by an insulating layer, in advance. When the electrically conductive yarn 11 whose outer surface is covered by an insulating layer is used, durability such as washing durability is increased.

The connective insulating yarn 12 has two connection portions 12a, at both ends, wound on the ends of the adjacent electrically conductive yarns 11. The connection portion 12a can be formed, for example, by a conventional yarn splicer. More, the connection means is not limited to yarn splicers. For example, they may be connected by an adhesive.

As described above, the yarn core B is composed by connecting the electrically conductive yarn 11 and the connective insulating yarn 12 alternately. Therefore, the difficult winding step of the antenna portion is not needed, and a known connection means such as a splicer can be used for efficient mass production. However, conventionally, the electrically conductive yarn 11 has been wound on a core yarn, and the winding step is needed.

Since the electronic component 10 is carried on the electrically conductive yarn 11 and is fixed by an adhesive, the electronic component 10 is easily attached to the electrically conductive yarn 11 for efficient mass production. In this example, the electronic component 10 and the electrically conductive yarn 11 are electromagnetically coupled for signal transmission, the adverse impact by the tension applied to the electrically conductive yarn 11 is reduced. Therefore, when one continuous yarn core B is made by connecting the electrically conductive yarns 11 by the connective insulating yarn 12, the resulting yarn core B has enough durability to the tension applied to it.

The electrically conductive yarn 11 is preferably a multi-filament yarn comprising a dielectric fiber material coated by a metal material. Since fiber materials for conventional yarn are used, the electrically conductive yarn has similar flexibility, durability to stretch, and durability to bending, during a weaving process and a knitting process as conventional yarns have.

An electrically conductive yarn described in Patent Document 4 is preferable. In particular, the electrically conductive yarn can be a multi-filament yarn that comprises a dielectric fiber material having a fineness not larger than 10 decitex and coated by the metal material. Since each fiber material constituting the multi-filament yarn is coated by the metal material, the multi-filament yarn has an approximately even distribution of the metal. Therefore, the multi-filament yarn has superior electrical properties such as low electric resistance and low transmission loss at high-frequency, is light in weight, and has superior flexibility and durability to bending. The electrically conductive yarn has preferably a high-frequency transmission loss of not larger than 5dB at 300MHz to 1500MHz and durability to bend to keep conductive such that the increase ratio is not larger than 150% to a dynamic driving test of 70 kilo-cycles or more.

For manufacturing the electrically conductive yarn 11, a multi-filament yarn having an electric resistance of 0.5 ohm/m to 10 ohm/m measured by the four-terminal method with a digital multimeter, a mechanical strength of 47 kilogram /mm² or more (measured by the tensile strength test according to JIS L 1096) , and a fineness of 54 decitex to 440 decitex. Then, a pre-processing process, an electroless plating process, and an electroplating process are performed so that the metal material is fixed on the fiber surface. Then, a twisting process is performed to a twisting number of 160 turns/m to 200 turns/m such that the electrical resistance is stably low. If needed, an insulating process is applied to the resultant electrically conductive yarn to form an insulating layer of 20 micro-meter thickness to 150 micro-meter thickness by a conventional insulating material applied to general insulating wires.

The fiber materials suitable for the electrically conductive yarn 11 are, for example, polyamide fiber, polyester fiber, aramid fiber, crystalline polyester fiber, polyparaphenylene-benzo-bis-oxazole fiber (PBO fiber), carbon fiber, polyphenylene sulfide (PPS) fiber, poly-ether-ether-ketone (PEEK) fiber, polyimide fiber, and fluorine fiber.

The metal material to be fixed on the fiber surface is one which can be deposited by known electroless plating, such as copper, copper/nickel, nickel, gold, palladium, silver, and so on, and one or more metals are usable. In addition, to avoid detection by needle detectors, the metal material used in the preprocessing process, electroless plating process, and electroplating process is preferably a non-magnetic metal. The pre-processing process can be omitted.

The resin material for the insulating layer covering the outer surface of the electrically conductive yarn 11 is, for example, polyethylene resin, polyamide resin, polyurethane resin, polyester resin, polyimide resin, fluorine resin, ethylene fluorine copolymer resin, styrene resin, polyvinylchloride resin (PVC), polyvinyl alcohol resin, and so on. Preferably, the electrically conductive yarn 11 with the insulating layer has a voltage resistance of 1000 V or more to withstand voltage test applying alternating voltage for one minute. For this purpose, the thickness of the electrically conductive yarn covered by the insulating layer is preferably 0.09 mm to 0.65 mm (measured with a test method according to JIS L1096).

Other electronic components than the IC chip for RFID are usable for example as an IC chip for sensors, such as a temperature sensor, acceleration sensor, humidity sensor, illuminance sensor, sound sensor, contact sensor, and stress sensor. The IC chips for sensors can be supplied with electric power by connecting an electrical feeding line to the electrically conductive yarn or by contactless feeding. For avoiding the detection by a needle detector, similarly to the electrically conductive yarn, a non-magnetic electronic component is preferable.

The connective insulating yarn 12 has preferably a tensile strength smaller than that of the electrically conductive yarn 11 such that the connection between the electrically conductive yarn 11 and the electronic component 10 is maintained. For example, when the loop-like portion of the electrically conductive yarn has a rupture strength of 24N, an elongation at break of 14%, a preferable connective insulating yarn 12 does not affect the deformation nor rupture of the loop-like portion and has a rupture strength smaller than 24N and an elongation at break larger than 14% for preventing the rupture of the loop-like portion of the electrically conductive yarn 11.

The connective insulating yarn 12 has preferably a dielectric property not affecting the electro-magnetic coupling between the electronic component 10 and the loop-like portion of the electrically conductive yarn 11. Further, the fineness of the connective insulating yarn 12 is preferably smaller than the fixed portion of the electronic component 10 to the electrically conductive yarn such that the pass of the yarn core B is not prevented during the covering process by the protective yarn. In particular, the connective insulating yarn has preferably a thickness smaller than that of the electrically conductive yarn 11 between 0.09mm to 0.65mm (measured with a test method according to JIS L1096).

The arrangement pitch of the electrically conductive yarns 11 supporting the electronic components 10 can be adjusted by adjusting the length of the connective insulating yarn 12, and therefore, the length of the connective insulating yarn 12 can be adjusted according to goods to which the electronic component 10 will be applied. For example, when the composite yarn is knitted or woven in textile articles, the connective insulating yarn 12 has preferably a sufficient length such that the connective insulating yarn can be dealt with as a usual yarn, and the electronic component 10 can be embedded and held in the textile articles.

Examples of the fiber materials for the connective insulating yarn 12 include a natural spun yarn made of cotton, hemp, or wool, and natural spun yarn and filament made of silk. Examples of chemical fibers for the connective insulating yarn include spun yarn, multi-filament yarn, and mono-filament yarn, respectively made of rayon, cupra, acetate, vinylon, nylon, vinyl chloride, polyester, acryl, polypropylene, urethane, or the like.

Preferable protective insulating yarn 13 comprises a fiber material having a mechanical property and flexibility for stabilizing the adhesion between the loop-like portion of the electronic component 10 and the electrically conductive yarn 11 and protecting them from external physical stress. Further, the preferable protective insulating yarn 13 has a mechanical property not causing the deformation or rupture of the loop-like portion of the electrically conductive yarn 11, as the connective insulating yarn 12 is. Further, the protective insulating yarn 13 has, preferably, a dielectric property not badly affecting the electro-magnetic coupling between the electronic component 10 and the loop-like portion of the electrically conductive yarn 11. The protective insulating yarn 13 for the covering process is, in fineness, preferably finer than the fixed portion of the electronic component 10. The protective insulating yarn is preferably, in fineness, finer than the electrically conductive yarn 11, so as not to prevent the pass of the composite yarn A and is preferably, in the thickness, 0.07 mm to 0.65 mm (measured with a test method according to JIS L1096).

Preferable examples of the fiber materials for the protective insulating yarn 13 include natural spun yarns made of cotton, hemp, or wool, and spun yarn and filament fiber made of silk. Examples of preferable chemical fibers include spun yarn, filament yarn and processed yarn made of fiber materials, such as rayon, cupra, acetate, vinylon, nylon, vinyl chloride, polyester, acryl, polypropylene, urethane, aramid, polyarylate, or the like.

Filament yarn for the protective insulating yarn 13 is a non-twisted yarn or a sweet twisted yarn nearly non-twisted, covers the surface, and enhances the protection with being spread and flattened when wound. Preferably, the protective insulating yarn 13 has a fineness of 1/10 or less of that of the yarn core B. When a thick yarn having a fineness exceeding 1/10 of that of the yarn core B is used, the composite yarn A becomes hard and not flexible and sometimes causes damage to the electronic component 10 by an excessive winding force. Further, a protective insulating yarn 13 with a small single filament fineness is easily crushed and flattened when wound, covers the electronic component 10 reliably and keeps the composite yarn A flexible. In particular, the protective insulating yarn 13 has, preferably, in single filament fineness, 0.3 decitex to 2.5 decitex, and, more preferably, 0.3 decitex to 1.5 decitex. The protective insulating yarn 13 is preferably wound such that it covers the surface of the yarn core B by 30% to 90%. If the coverage is lower than 30%, the electronic component 10 may be exposed between the protective insulating yarn 13 and come off, and if it exceeds 90%, the flexibility of the composite yarn A becomes not enough.

Fig. 2 indicates an example of a manufacturing process of the composite yarn. Fig. (2a) indicates the supporting step for supporting the electronic component 10 on the electrically conductive yarn 11. First, a long single continuous conductive yarn 11 is cut to pieces of a predetermined length, and a loop-like portion 11a is formed in the center portion of the pieces of the electrically conductive yarn 11. For forming the loop-like portion, for example, the central portions of the pieces of electrically conductive yarn are wound on a round bar-like guide member. Multiple loop-like portions can be formed if wound multiple times.

In this example, the electrically conductive yarn is cut in advance to the predetermined length, however, sequential loop-like portions may be formed without cutting.

Then, an adhesive is applied to the surface to be supported of the electronic component 10, and the loop-like portion 11a of the electrically conductive yarn 11 is made in contact with the surface of the electronic component 10 applied with the adhesive, to connect them. For making the electronic component 10 in contact with the loop-like portion 11a, for example, the electronic component 10 is arranged at the tip of the guide member. The guide member is projected from a hole of a support plate, and the loop-like portion 11a is wound around the guide member. Then, the guide member is removed from the support plate through the hole, and the loop-like portion 11a remains on the support plate and is made adhering to the electronic component 10.

According to the supporting step, the electronic component 10 can be efficiently and stably supported on the electrically conductive yarn 11, and mass production can be achieved.

The electronic component 10 can be made adhering to the loop-like portion 11a of the electrically conductive yarn 11 and can be sealed with a resin. For this purpose, the loop-like portions 11a are formed at a predetermined pitch, without cutting the electrically conductive yarn 11, and the electronic components are connected. Then, the electrically conductive yarn 11 supporting the electronic components 10 is transferred in the yarn length direction, the portions connected to the electronic components 10 are immersed in a liquid resin tank for forming an insulating resin seal film.

Fig. (2b) indicates a connection step for connecting both ends of the electrically conductive yarn 11 supporting the electronic component 10 with the connective insulating yarn 12 to form the yarn core B. A plurality of conductive yarns 11 are sequentially introduced into the yarn splicer 20 along the yarn length direction, and, at the same time, the connective insulating yarn 12 is introduced into the yarn splicer 20. For introducing the electrically conductive yarn 11, for example, the end portion of the electrically conductive yarn 11 is clamped by a clamping device (not shown), and the clamping device is moved to the inlet port of the yarn splicer 20.

Then, the tip end of the connective insulating yarn 12 is wound around the rear end of the electrically conductive yarn 11 for splicing them in the introduction direction, the electrically conductive yarn 11 is carried out and the connective insulating yarn 12 is conveyed by a predetermined length. Then, the connective insulating yarn 12 is wound around the front end of the next electrically conductive yarn 11 in the introduction direction, and the electrically conductive yarns 11 are mutually connected in the yarn length direction. After the connection, the connective insulating yarn 12 is cut out. The connective insulating yarn 12 repeatedly connects between the rear end of the electrically conductive yarn 11 and the front end of the next electrically conductive yarn 11 in the introduction direction, and the yarn core B is formed.

When the electrically conductive yarn is not cut and supports the electronic components in the supporting step, to a previous electrically conductive yarn, the tip portion of the next connective insulating yarn is connected, and, at the same time, the previous yarn is cut at a rear position from the connection portion, at a downstream side in the yarn feeding direction. Then, the connective insulating yarn is connected to the tip end (cut portion) of the electrically conductive yarn, and, simultaneously, the connective insulating yarn is cut after the connection portion. By repeating them alternately, the composite yarn in which the electrically conductive yarn and the connective insulating yarn are alternately connected is efficiently manufactured.

The connection portions by the yarn splicer may be further thermally fused or connected by an adhesive. The electrically conductive yarn and the connective insulating yarn can be connected without a yarn splicer; for example, the ends of them may be connected by an adhesive.

Fig. (2c) indicates a protection process; the protective insulating yarn 13 is wound on the yarn core B to form the composite yarn A. In this example, the protective insulating yarn 13 is wound on the yarn core B nearly without a gap, by covering process. The covering process may be a double covering process, if needed, and is not particularly limited.

When the protective insulating yarn is wound on the yarn core by the covering process, the twist number is set preferably according to the size of the electronic component to be supported. For example, when the electronic component has a size of 0.5 mm to 0.7 mm, the double covering by S twist or Z twist having a twist number of 2,000 T/m (Turn /m) or more is preferable to wound the protective insulating yarn at least once on the electronic component. When a protective insulating yarn having a single yarn fineness of 0.3 decitex to 2.5 decitex is wound 1.5 times or more on the electronic component, the protective insulating yarn is flattened and covers the electronic component widely such that the electronic component is held at plural points and that the electronic component is securely fixed.

Further, after the covering, the composite yarn A may be covered by a resin material to cover the outer surface of the yarn, as a post-process.

The resultant composite yarn A has a mechanical property equivalent to the normal yarns for weaving and knitting in the tensile strength and so on. Therefore, the yarn can be wound up on a reel, a bobbin, or the like, stored as normal yarns are, and can be used by taking out from the bobbin or the like, as normal yarns are. Further, the connective insulating yarn of the composite yarn A can be cut, and the combination of the electrically conductive yarn and the electronic component can be used by itself. The usage is versatile.

For weaving or knitting the composite yarn into a woven fabric or a knitted fabric as normal yarns are, the electrically conductive yarn supporting the electronic component has to stretch without physical or electrical damage. For normal weaving and knitting, the composite yarn having an elongation at rupture of 5% or more and residual deformation of 1% or less after the elongation of 3% can be similarly to normal yarns.

For the composite yarn having the same durability to weaving and knitting as normal yarns, the composite yarn needs isotropic flexibility regarding the fiber axis. When the composite yarn has a pseudo-concentric shape and isotropic flexibility regarding the fiber axis, the composite yarn can be handled as normal yarns are. In particular, the aspect ratio of the pseudo-concentric circle is preferably 2 or less and an exact pseudo-circle is most preferable. If the aspect ratio exceeds 2, the flexibility is not uniform depending on the bending direction, and the composite yarn becomes difficult to handle as normal yarns are. Here, the aspect ratio means one in a cross-section perpendicular to the fiber axis. Further, regarding the flexibility of the composite yarn has, displacement in the various directions from the average is 50% or less, when measured by a pure bending tester (KES FB2-AUTO-A of Kato Tech. Co., Ltd.). If it exceeds 50%, handling as usual yarns becomes difficult.. When the composite yarn has such flexibility, it has similar flexibility in fabrics as usual yarns and does not cause a discomfort feeling in textile articles.

The bending resistance of the composite yarn can be measured by repeatedly applying load such that the electrically conductive yarn in the composite yarn supporting the electronic component is bent by 90 degrees both to the left and right regarding the fiber axis. If the resistance of the electrically conductive yarn is maintained at 30 Ω /cm or less, and if the performance of the electronic component is not badly affected, after loading 1000 times, the electrically conductive yarn can be handled similarly as normal yarns, without rupture of the electrically conductive yarn nor coming off of the electronic component and is evaluated as having enough bending resistance. Regarding the bending resistance, it is further preferable that the resistance of the electrically conductive yarn is maintained at 30 Ω /cm or less after applying load bending to 135 degrees 10,000 times.

### Embodiments

Hereinafter, the present invention will be described with reference to embodiments; however, the present invention is not limited to the embodiments.

### (1) Evaluation of durability to stretch

Tensile strength (N) and elongation at rupture (%) of the electrically conductive yarn and the connective insulating yarn were measured by "Tensilon Universal Material Testing Instrument" (A&D Co., Ltd.). The measurement was repeated under the same conditions, and, from the average of the measured values, the tensile strength and elongation at rupture were determined.

### (2) Evaluation of flexibility

The rigidity and flexibility (mm) of the composite yarn was measured by the 45-degree cantilever method according to JIS L1096.

### (3) Evaluation of communication range

The composite yarn was tested by "Voyantic Tagformance Pro" RFID tester. The Command was ISO 18000-6C Query, and the frequency band was changed within 800 to 1,000 MHz in the step of 5 MHz, which covers European, Asian, and North American areas.

The communication range was calculated based on the signal strength from the electronic component, with increasing the output of the tester by 0.1 dBm within the above frequency band.

| | |
|---|---|
| Measurement mode: | Threshold |
| Command: | ISO 18000-6C Query |
| Start Frequency: | 800 MHz |
| Stop Frequency: | 1,000 MHz |
| Frequency Step: | 5 MHz |
| Power Step: | 0.1 dBm |

### Embodiment 1

### <Material used>

### ○ Electrically conductive yarn

An electrically conductive yarn (product number F11TP, produced by Urase Co., Ltd.) was used. The electrically conductive yarn was manufactured as follows; A multi-filament aramid fiber (fineness 110 decitex, filament number 48) was used, and, after electroless copper plating, electrolytic copper plating was applied to the yarn (copper metal adhesion amount 0.05 g/m). The yarn was twisted at 160 Turn/m, and a polyester elastomer resin coating (melting point: 219 degree Celsius, 100% MD: 37 MPs) was applied to the surface of the yarn. The tensile strength of the obtained electrically conductive yarn was 24.9N, and the elongation at rupture was 14.2%.

### O Electronic component

An RFID tag (LXMSJZNCMF-198, a product of Murata Manufacturing Co., Ltd. was used.

### O Connective insulating yarn

A nylon 66 mono-filament yarn produced by Toray Co., Ltd. was used. The thickness of the mono-filament yarn was 0.07 mm (measured with a test method according to JIS L1096). The tensile strength of the mono-filament yarn was 3.4N, and the elongation at rupture was 35.7%.

### O Protective insulating yarn

A polyester woolly yarn (type: F0210W, SD fineness: 167 decitex, 144 filaments) produced by Teijin Frontier Co., Ltd. was used.

### <Manufacturing of the yarn core>

The yarn core was manufactured by the supporting step and the connection step respectively described in Figs. 2 (a) and 2 (b). The electrically conductive yarn was cut to a length of 140 mm, a loop-like portion having a diameter of 1.3 mm was formed at the center portion, and the electronic component was connected by an adhesive (an instantaneous adhesive, produced by Three Bond Fine Chemical Co., Ltd.). Then, by a yarn splicer (Ilman Splicer 101, produced by MESDAN Co., Ltd.), the electrically conductive yarn supporting the electronic component and the connective insulating yarn were connected alternately in the yarn length direction so as to manufacture the yarn core. The length of the connective portion where the electrically conductive yarn of the yarn core and the connective insulating yarn overlap was set at 5 mm.

### <Winding of the protective insulating yarn>

The protective insulating yarn was wound on the yarn core by covering process according to the protection step described in Fig. 2(c). In the covering process, a covering device (PF-D230 produced by Kataoka Machinery Co., Ltd.) was used and double covering (twist number of 3400 T/m in both the twisting directions of S and Z) was applied to produce the composite yarn.

### <Characteristics of the composite yarn>

The composite yarns manufactured had a nearly constant length of 13 cm in the electrically conductive yarn, and the pitch of the electrically conductive yarns was 135 cm. Therefore, the arrangement of the electrically conductive yarn could be easily observed with the naked eye.

The thicknesses (diameter) of the yarn at the supporting portion of the electronic component, the electrically conductive yarn, and the connective insulating yarn (connective yarn) were measured at plurality points with a test method according to JIS L1096. Measured). The thickness of the supporting portion of the electronic component was 1.15 mm to 2.53 mm, that of the electrically conductive yarn was 0.56 mm to 0.73 mm, and that of the connective yarn was 0.36 mm to 0.41 mm. Thin electrically conductive yarn and thin connective yarn made it possible to handle the yarn as usual yarns are.

The tensile strength and elongation at rupture were measured for the entire composite yarn, the connective insulating yarns were stretched gradually due to the load, and complex properties were measured. The maximal tensile strength was 3.7 N, and the elongation at rupture was 29.7%. Further, the tensile strength and the elongation at rupture of the electrically conductive yarn supporting the electronic component were measured, and the tensile strength was 9N and the elongation at rupture was 4%. The strength of the entire composite yarn was nearly the same as that of the connective insulating yarn. The strength of the electrically conductive yarn was higher than that of the connective insulating yarn, and the elongation was lower. Thus, the influence of the load seems mainly to affect the connective yarn and has little influence on the electrically conductive yarn.

The rigidity and softness (bending stiffness) of the electrically conductive yarn in the composite yarn was measured, and the rigidity and softness was 84 mm. It was enough flexible for weaving and knitting.

### Embodiment 2

### <Material used>

The same materials as in embodiment 1 were used.

### <Manufacturing of the yarn core>

Manufactured in the same manner as in embodiment 1.

### <Winding of the protective insulating yarn>

Using the same covering device as in embodiment 1, double covering (twisting number of 3400 T/m in both the twisting directions S and Z directions) was performed twice to obtain a composite yarn.

### <Characteristics of the composite yarn>

In the resultant composite yarn, the lengths of the plurality of conductive yarns supporting the electronic component were constant at about 13 cm, and the electrically conductive yarns were connected at a length of 135 cm. Therefore, the arrangement state of the electrically conductive yarn could be easily identified with the naked eye.

The thickness of the supported portion, the electrically conductive yarn, and the connective portion of the electronic component was measured at a plurality of places (measured with a test method according to JIS L1096) . The thickness of the supporting portion of the electronic component was 1.2 mm to 2.2 mm, the thickness of the electrically conductive yarn was 0.85 mm to 0.92 mm, and the thickness of the connective portion was 0.66 mm to 0.78 mm. Since the electrically conductive yarn and the connective portion are formed thinly, the composite yarn can be handled in the same manner as normal yarns.

When the tensile strength and elongation at rupture were measured for the entire composite yarn, the same transition as in embodiment 1 was shown, the maximum load was 3.4 N, and the maximum elongation was 34.8%. These values are almost the same as those of the connective insulating yarn, and it was confirmed that there is almost no influence of the electrically conductive yarn as in embodiment 1.

The rigidity and softness of the electrically conductive yarn of the composite yarn was 88 mm. Similar to embodiment 1, it was confirmed that the fabric had sufficient flexibility for weaving and knitting.

### Embodiment 3

A knitted fabric was knitted such that the composite yarn of embodiment 1 was knitted into a knitted fabric.

### <Material used>

The knitting yarn was cotton yarn 20/2 (double cotton yarn of yarn account 20) x 3.

### <Manufacture of knitted fabric>

The composite yarn was supplied from a bobbin and used as a part of the weft yarn. The knitted fabric was plainly knitted by a flat knitting machine (MACH2 (registered trademark of Shima Seiki) VS183 12G, a product of Shima Seiki MFG., Ltd.).

In the plain knitting process, the composite yarn was knitted by inlay with a width of about 2 cm. The connective insulating yarn in the composite yarn adjacent to the electrically conductive yarn was knitted by inlay such that the electronic component and the electrically conductive yarn were arranged outside the knitted fabric. The composite yarn was held and cut by a cutter and a yarn holding device at the end of the needle bed of the flat knitting machine. The composite yarn extends between the inlay position and the cutting/holding position, and the length of the composite yarn after knitting was about 140 cm. Here, the inlay is a knitting method in which the yarn is held in the knitted fabric without fixing the yarn by stitches.

### <Characteristics of the knitted fabric>

The composite yarn was knitted and fixed as a part of knitting yarn into the knitted fabric, without damage nor peeling off of the electronic component. The knitted fabric was repeatedly washed and dried, and the communication range was measured for the evaluation of the wireless communication characteristics. The communication range was 3m to 4m at 920 MHz and was stable after 30 washes. In addition, regular signal processing was performed after washing and drying with sufficient washing durability.

The RFID chip and the electrically conductive yarn as the antenna are arranged on the outer surface of the knitted fabric in the embodiment, they can be easily removed from the final product after using them for production management. While the composite yarn was knitted within the knitted fabric by inlay, the composite yarn it can be knitted by tucking or the like.

For using the electronic component in final products without removing it, the electronic component and the antenna can be knitted into the knitted fabric, and extra portions (the connective insulating yarn) protruding from the knitted fabric can be cut off.

### Comparative example

A commercially available composite yarn (E-Thread (TM) of PrimolD Company) was measured regarding elasticity and flexibility. The composite yarn comprised a core yarn made of polyester fiber and package tags with metal wire antennae, arranged in the yarn length direction. The composite yarn had a covering of covering yarn.

### <Characteristics of the commercially available composite yarn>

The commercially available composite yarn had portions supporting the package tag at about 200 cm pitch, and the arrangement of the composite yarn could be easily observed with the naked eye.

The thicknesses of the supporting portion of the package tags, the antenna portion, and other portions were measured at multiple points (measured with a test method according to JIS L1096) . The supporting portion had a thickness of 1.35 mm to 1.4 mm, the antenna portion had a thickness of 0.9 mm to 1.05 mm, and the other portion had a thickness of 0.58 mm to 0.62 mm.

The tensile strength and the elongation at rupture of the commercially available composite yarn were measured. The tensile strength was 96.0 N and the elongation at rupture was 74.0%. These values seem to be determined by the tensile strength and elongation at rupture of the core yarn. Since the package tag and the antenna portion are sandwiched between the core yarn and the covering yarn, they are badly affected such as misalignment when the core yarn is extended and the covering yarn holds the composite yarn. These affections lead to the peeling of the package tags.

While we have tried to measure the rigidity and softness of the supporting portion and the antenna portion of the package tag, the rigidity and softness could not be measured at 140 mm. Therefore, the commercial composite yarn requires special attention for weaving and knitting.

### Embodiment 4

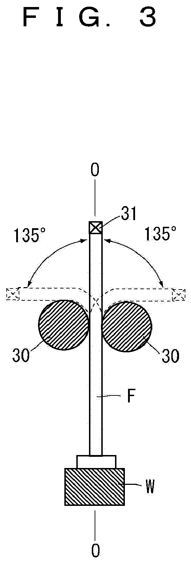

The bending durability and the reading ranges were repeatedly measured regarding the composite yarns of embodiments and the comparative example. For measuring the bending durability, a bending tester shown in Fig. 3 was used.

A pair of stainless rods (diameter of 10 mm) 30 were arranged horizontally and parallelly to each other at an interval of 5 mm. A clamping member 31 was arranged above the stainless rods 30 rotatably about a rotation axis O-O passing through an intermediate line between the stainless rods 30. The composite yarn F was fixed to the clamping member 31 at its upper end, applied a load W = 19.6 cN to the lower end to pull down, and passed between the stainless rods 30 orthogonally to the axial direction of the stainless rod 30.

The antenna portion close to the RFID chip portion was set orthogonal to the stainless rods 30, the antenna portion has a large effect on the reading range. The bending angle was set to ± 135 degrees. By a reading device (XIT-260-G product of Welcat Co.), the outputs at 250 Mw were measured. The results are shown in Table 1.

**Table 1**

| Number of bending | (Cycles) 0 | 10.000 | 20.000 | | 40.000 | 50.000 | 60.000 |
|---|---|---|---|---|---|---|---|
| 100.000 | | | | | | | |
| Reading range (cm) | | | | | | | |
| Embodiment 1 | 70 | 70 | 70 | 70 | 70 | 70 | 70 |
| Embodiment 2 | 70 | 70 | 70 | 70 | 70 | 70 | 70 |
| Comparative example | 100 | 100 | 90 | 80 | 60 | 0 | 0 |

Embodiments 1 and 2 had a stable reading range after bending 100,000 cycles and had twice or more durability to bending compared to the comparative example.

### Industrial Applicability

The composite yarns according to the embodiments are thin (3 mm or less in thickness) at the electrically conductive yarn, are short in length (about 130 mm long), and have enough flexibility, bending durability, and washing resistance. For example, when a composite yarn having a UHF band RFID package tag at the center portion of the electrically conductive yarn is used and automatically inserted into textile products in the same manner as usual yarns during the manufacturing of the textile products. The traceability, stock management, and shipping management of textile products can be enhanced with automatic recognition by conventional reading terminals resulting in labor saving. The textile products having the composite yarn can be used in retail sellers for the arrival, sales, and stock management and also used for authenticity assessment by the ID data in the RFID chip.

Further, the composite yarns according to the embodiments having a durability of 100 cycles or more to industrial washing can be used for linen supply usage. As described above, the composite yarn supporting the RFID chip can be used for arrival and shipment control, traceability purpose, and stock control for substantial labor saving and running cost saving.

Further, the composite yarn according to the embodiments can be easily fixed to textile products with high wearability and can be used to other usages with electronic components such as sensors for obtaining data in versatile applications.

### Description of Symbols

- A: Composite Yarn
- B: Yarn Core
- 10: Electronic Component
- 11: Electrically Conductive Yarn
- 12: Connective Insulating Yarn
- 13: Protective Insulating Yarn
- 30: Stainless Rod
- 31: Clamping Member

## Claims

1. A composite yarn comprising: a yarn core (B); and a protective insulating yarn (13) wound on the yarn core (B), wherein said yarn core (B) comprises: plural electrically conductive yarns (11) having a pre-determined length and supporting electronic components (10); **characterized in that** said yarn core further comprises a plurality of connective insulating yarns (12) connecting said plural electrically conductive yarns (11) in the lengthwise direction of the yarn core (B) such that said plural electrically conductive yarns (11) and said plurality of the connective insulating yarns (12) are connected alternately at their both ends.

2. The composite yarn of claim 1, being **characterized in that** said electrically conductive yarns (11) have a higher tensile strength than that of said connective insulating yarns (12).

3. The composite yarn of claim 1 or 2, being **characterized in that** said electronic components (10) adhere by an adhesive on loop-like portions (11a) formed by a portion of said electrically conductive yarns (11).

4. The composite yarn of one of claims 1 to 3, being **characterized in that** said electrically conductive yarns (11) are coated by an insulating resin layer on the outer surface of the electrically conductive yarns (11).

5. The composite yarn of one of claims 1 to 4, being **characterized in that** said electrically conductive yarns (11) comprise a multi-filament having bundled dielectric mono-filaments and a metallic layer covering the outer surface of the multi-filament.

6. The composite yarn of one of claims 1 to 5, being **characterized in that** said connective insulating yarns (12) are wound on the ends of said electrically conductive yarns (11) and are connected to said electrically conductive yarns (11).

7. The composite yarn of one of claims 1 to 6, being **characterized in that** said protective insulating yarn (13) is wound doubly on said electrically conductive yarns (11) and said connective insulating yarns (12).

8. The composite yarn of one of claims 1 to 7, being **characterized in that** said electronic components (10) are IC chips for RFID,
that said IC chips have inner antennae having an electrically conductive pattern,
that said electrically conductive yarns (11) constitute outer antennae, and
that said inner antennae and said outer antennae are electromagnetically coupled at said loop-like portions (11a).

9. A manufacturing method of a composite yarn comprising a yarn core (B) and a protective insulating yarn (13) wound on the yarn core (B) being **characterized by** performing:
a connection step for forming said yarn core (B), by connecting one end of a connective insulating yarn (12) to an end of an electrically conductive yarn (11) having a pre-determined length and supporting an electronic component (10), further connecting the other end of said connective insulating yarn (12) to an end of a next electrically conductive yarn (11) having the pre-determined length and supporting another piece of the electronic component (10), and further connecting the other end of the next electrically conductive yarn (11) to one end of a next connective insulating yarn (12) such that a plurality of the connective insulating yarns (12) and a plurality of the electrically conductive yarns (11) are alternately connected at their both ends;
a protection step for winding the protective insulating yarn (13) on the yarn core (B), after the connection step.

10. The manufacturing method of the composite yarn according to claim 9,
being **characterized by** further performing a supporting step for forming a loop-like portion (11a) using a portion of said electrically conductive yarn (11) and for adhering said electronic component (10) on said loop-like portion (11a) such that the electronic component (10) is integrally supported by the electrically conductive yarn (11) before said connection step.

11. The manufacturing method of the composite yarn according to claim 9 or 10,
being **characterized by** further performing a covering step for coating the outer surface of said electrically conductive yarn (11) by an insulating resin layer before or after said supporting step.

## Patentansprüche

1. Ein zusammengesetzter Faden, aufweisend:
einen Fadenkern (B), und
einen schützenden isolierenden Faden (13), der um den Fadenkern (B) gewickelt ist,
wobei der Fadenkern (B) aufweist:
mehrere elektrisch leitende Fäden (11), die eine vorbestimmte Länge aufweisen und elektronische Komponenten (10) halten,
**dadurch gekennzeichnet, dass** der Fadenkern weiterhin eine Vielzahl von verbindenden isolierenden Fäden (12) aufweist, die die mehreren elektrisch leitenden Fäden (11) in der Längsrichtung des Fadenkerns (B) verbinden, sodass die mehreren elektrisch leitenden Fäden (11) und die Vielzahl von verbindenden isolierenden Fäden (12) alternierend an ihren beiden Enden verbunden sind.

2. Zusammengesetzter Faden nach Anspruch 1, **dadurch gekennzeichnet, dass** die elektrisch leitenden Fäden (11) eine höhere Zugfestigkeit aufweisen als die verbindenden isolierenden Fäden (12).

3. Zusammengesetzter Faden nach Anspruch 1 oder 2, **dadurch gekennzeichnet, dass** die elektronischen Komponenten (10) mittels eines Klebers an schlaufenartigen Teilen (11a), die durch einen Teil der elektrisch leitenden Fäden (11) gebildet werden, haften.

4. Zusammengesetzter Faden nach einem der Ansprüche 1 bis 3, **dadurch gekennzeichnet, dass** die elektrisch leitenden Fäden (11) mit einer isolierenden Harzschicht an der Außenfläche der elektrisch leitenden Fäden (11) beschichtet sind.

5. Zusammengesetzter Faden nach einem der Ansprüche 1 bis 4, **dadurch gekennzeichnet, dass** die elektrisch leitenden Fäden (11) ein Multifilament, das gebündelte dielektrische Monofilamente umfasst, und eine metallische Schicht, die die Oberfläche des Multifilaments bedeckt, aufweisen.

6. Zusammengesetzter Faden nach einem der Ansprüche 1 bis 5, **dadurch gekennzeichnet, dass** die verbindenden isolierenden Fäden (12) auf die Enden der elektrisch leitenden Fäden (11) gewickelt sind und mit den elektrisch leitenden Fäden (11) verbunden sind.

7. Zusammengesetzter Faden nach einem der Ansprüche 1 bis 6, **dadurch gekennzeichnet, dass** der schützende isolierende Faden (13) doppelt auf die elektrisch leitenden Fäden (11) und die verbindenden isolierenden Fäden (12) gewickelt ist.

8. Zusammengesetzter Faden nach einem der Ansprüche 1 bis 7, **dadurch gekennzeichnet, dass**:
die elektronischen Komponenten (10) IC-Chips für eine RFID sind,
die IC-Chips eine innere Antenne mit einem elektrisch leitenden Muster aufweisen,
die elektrisch leitenden Fäden (11) eine äußere Antenne bilden, und
die innere Antenne und die äußere Antenne an den schlaufenartigen Teilen (11a) elektromagnetisch miteinander gekoppelt sind.

9. Ein Herstellungsverfahren für einen zusammengesetzten Faden, der einen Fadenkern (B) und einen schützenden isolierenden Faden (13), der um den Fadenkern (B) gewickelt ist, aufweist, **gekennzeichnet durch** das Durchführen von:
einem Verbindungsschritt für das Ausbilden des Fadenkerns (B) durch das Verbinden eines Endes eines verbindenden isolierenden Fadens (12) mit einem Ende eines elektrisch leitenden Fadens (11), der eine vorbestimmte Länge aufweist und eine elektronische Komponente (10) hält, weiterhin durch das Verbinden des anderen Endes des verbindenden isolierenden Fadens (12) mit einem Ende eines nächsten elektrisch leitenden Fadens (11), der die vorbestimmte Länge aufweist und einen anderen Teil der elektronischen Komponente (10) hält, und weiterhin durch das Verbinden des anderen Endes des nächsten elektrisch leitenden Fadens (11) mit einem Ende eines nächsten verbindenden isolierenden Fadens (12), sodass eine Vielzahl der verbindenden isolierenden Fäden (12) und eine Vielzahl der elektrisch leitenden Fäden (11) alternierend an ihren beiden Enden verbunden sind,
einen Schutzschritt zum Wickeln des schützenden isolierenden Fadens (13) auf den Fadenkern (B) nach dem Verbindungsschritt.

10. Herstellungsverfahren für einen zusammengesetzten Faden nach Anspruch 9, **gekennzeichnet durch** das weitere Durchführen eines Halteschritts zum Ausbilden eines schlaufenartigen Teils (11a) unter Verwendung eines Teils des elektrisch leitenden Fadens (11) und zum Kleben der elektronischen Komponente (10) an den schlaufenartigen Teil (11a), sodass die elektronische Komponente (10) integriert durch den elektrisch leitenden Faden (11) gehalten wird, vor dem Verbindungsschritt.

11. Herstellungsverfahren für einen zusammengesetzten Faden nach Anspruch 9 oder 10, **gekennzeichnet durch** das weitere Durchführen eines Abdeckschritts zum Beschichten der äußeren Fläche des elektrisch leitenden Fadens (11) mit einer isolierendem Kunstharzschicht vor oder nach dem Halteschritt.

## Revendications

1. Fil composite comprenant : une âme de fil (B) ; et un fil isolant protecteur (13) enroulé sur l'âme de fil (B), dans lequel
ladite âme de fil (B) comprend : plusieurs fils électriquement conducteurs (11) ayant une longueur prédéterminée et supportant des composants électroniques (10) ;
**caractérisé en ce que** ladite âme de fil comprend une pluralité de fils isolants de connexion (12) connectant lesdits plusieurs fils électriquement conducteurs (11) dans le sens de la longueur de l'âme de fil (B) de sorte que lesdits plusieurs fils électriquement conducteurs (11) et ladite pluralité des fils isolants de connexion (12) soient connectés en alternance à leurs deux extrémités.

2. Fil composite selon la revendication 1, **caractérisé en ce que** lesdits fils électriquement conducteurs (11) ont une résistance à la traction supérieure à celle desdits fils isolants de connexion (12).

3. Fil composite selon la revendication 1 ou 2, **caractérisé en ce que** lesdits composants électroniques (10) adhèrent par un adhésif sur des parties en forme de boucle (11a) formées par une partie desdits fils électriquement conducteurs (11).

4. Fil composite selon l'une des revendications 1 à 3, **caractérisé en ce que** lesdits fils électriquement conducteurs (11) sont revêtus d'une couche de résine isolante sur la surface externe des fils électriquement conducteurs (11).

5. Fil composite selon l'une des revendications 1 à 4, **caractérisé en ce que** lesdits fils électriquement conducteurs (11) comprennent un multi-filament ayant des mono-filaments diélectriques groupés et une couche métallique recouvrant la surface externe du multi-filament.

6. Fil composite selon l'une des revendications 1 à 5, **caractérisé en ce que** lesdits fils isolants de connexion (12) sont enroulés sur les extrémités desdits fils électriquement conducteurs (11) et sont connectés auxdits fils électriquement conducteurs (11).

7. Fil composite selon l'une des revendications 1 à 6, **caractérisé en ce que** ledit fil isolant protecteur (13) est enroulé doublement sur lesdits fils électriquement conducteurs (11) et lesdits fils isolants de connexion (12).

8. Fil composite selon l'une des revendications 1 à 7, **caractérisé en ce que** lesdits composants électroniques (10) sont des puces IC pour RFID,
que lesdites puces IC ont des antennes internes ayant un motif électriquement conducteur,
que lesdits fils conducteurs d'électricité (11) constituent des antennes externes, et
que lesdites antennes internes et lesdites antennes externes sont couplées électro-magnétiquement au niveau desdites parties en forme de boucle (11a).

9. Procédé de fabrication d'un fil composite comprenant une âme de fil (B) et un fil isolant protecteur (13) enroulé sur l'âme de fil (B), **caractérisé par** la réalisation :
d'une étape de connexion destinée à former ladite âme de fil (B), en connectant une extrémité d'un fil isolant de connexion (12) à une extrémité d'un fil électriquement conducteur (11) ayant une longueur prédéterminée et supportant un composant électronique (10), en connectant en outre l'autre extrémité dudit fil isolant de connexion (12) à une extrémité d'un fil électriquement conducteur suivant (11) ayant la longueur prédéterminée et supportant un autre élément du composant électronique (10), et connectant en outre l'autre extrémité du fil électriquement conducteur suivant (11) à une extrémité d'un fil isolant de connexion suivant (12) de sorte qu'une pluralité des fils isolants de connexion (12) et une pluralité des fils électriquement conducteurs (11) soient connectés en alternance à leurs deux extrémités ;
une étape de protection destinée à enrouler le fil isolant de protection (13) sur l'âme du fil (B), après l'étape de connexion.

10. Procédé de fabrication du fil composite selon la revendication 9,
**caractérisé en ce qu'**il comprend en outre la réalisation d'une étape de support destinée à former une partie en forme de boucle (11a) en utilisant une partie dudit fil électriquement conducteur (11) et destinée à coller ledit composant électronique (10) sur ladite partie en forme de boucle (11a) de sorte que le composant électronique (10) soit intégralement supporté par le fil électriquement conducteur (11) avant ladite étape de connexion.

11. Procédé de fabrication du fil composite selon la revendication 9 ou 10,
**caractérisé par** la réalisation en outre d'une étape de recouvrement destinée à revêtir la surface externe dudit fil électriquement conducteur (11) par une couche de résine isolante avant ou après ladite étape de support.
